# EUROPEAN PATENT SPECIFICATION

(11) **EP 4 522 670 B1**
(45) Date of publication and mention of the grant of the patent: **30.09.2026**
(21) Application number: 23725706.8
(22) Date of filing: 10.05.2023
(51) Int. Cl.: C08F 210/16, C08L 23/06, C08L 23/26, C08J 3/22

(54) **PROCESS FOR PRODUCING A MULTIMODAL POLYOLEFIN COMPOSITION IN AN EXTRUDER DEVICE**
VERFAHREN ZUM PRODUZIEREN EINER MULTIMODALEN POLYOLEFIN-ZUSAMMENSETZUNG IN EINEM EXTRUDER
PROCÉDÉ DE PRODUCTION D'UNE COMPOSITION DE POLYOLÉFINE MULTIMODALE DANS UNE EXTRUDEUSE

(30) Priority: 13.05.2022 EP 22173353
(43) Date of publication of application: 19.03.2025
(73) Proprietor: Basell Polyolefine GmbH, 50389 Wesseling (DE)
(72) Inventor: CONSALVI, Marco, 44122 Ferrara (IT); BORSOI, Lorenzo, 44122 Ferrara (IT); MALUCELLI, Decio, 44122 Ferrara (IT)
(74) Representative: LyondellBasell
(86) International application number: PCT/EP2023/062418
(87) International publication number: WO 2023/217859

(56) References cited:
- EP-A1- 2 966 123
- EP-A1- 3 450 127

## Description

### FIELD OF THE INVENTION

The present disclosure provides a continuous process for preparing a multimodal polyolefin composition comprising one or more antioxidants. The present disclosure provides in particular a continuous process for preparing a multimodal polyolefin composition comprising one or more antioxidants from a multimodal polyolefin in form of a polyolefin powder utilizing an organic peroxide.

### BACKGROUND OF THE INVENTION

Polyolefins are widely used commercial polymers. To achieve and maintain the desired properties, the polymers are equipped with additional substances. These so-called plastics additives are auxiliary compounds which significantly influence the properties of the polymers and make the polymers commercially useful, although the additives are only added in small quantities. The additives are usually combined with the polyolefins directly after their polymerization during the pelletizing step. A widely used kind of additives are antioxidants. These polymer additives suppress degradation of the polymers caused by reaction with atmospheric oxygen. Antioxidants are effective in all stages of the polymer life-cycle. Antioxidants allow to produce plastic items faster and with fewer defects, extend the useful lifespan of the articles, and facilitate recycling.

A specific kind of additives, which can be added after the polymerization for being present in the polyolefin pelletizing step, are free radical generators such as peroxides. Free radical generators can be employed, for example, for modifying the molecular structure of the polyolefins.

A significant application of polyolefins is the preparation of pipes and in particular the preparation of pressure pipe, i.e. of pipes designed to transport fluids at conditions having a higher pressure inside the pipe than outside the pipe. Suitable materials for producing polyolefin pipes having excellent mechanical properties including a good pressure resistance over a long period of time and good chemical resistance are bimodal or multimodal polyethylenes having a density from 0.940 g/cm³ to 0.968 g/cm³.

To be applicable for the preparation of pipes, the polyolefins need to have a good processability in pipe extrusion. One aspect of this processability, especially for the production of large diameter pipes, is a high resistance of the resulting pipe to "sagging". "Sagging" is the effect that during melt extrusion of the pipe a portion of the melt may flow from an upper part of the pipe to a lower part of the resulting in unacceptable pipe wall thickness variation around the pipe circumference.

To improve the sagging behavior of pipes produced form bimodal or multimodal polyethylenes, peroxides can be added in the pelletizing of the bimodal or multimodal polyethylenes. WO 2013/101767 A2, for example, discloses that bimodal high-density polyethylene polymer compositions are produced by feeding a bimodal high-density polyethylene base resin and peroxide into an extrusion device and mixing the polymer composition and the peroxide in the extrusion device until substantially homogeneous.

WO 2016/005044 A1 relates to a multimodal polyethylene composition which can be manufactured into pipes. The multimodal polyethylene composition comprises a high density multimodal ethylene polymer component and an ultrahigh molecular weight ethylene polymer component. The high density multimodal polyethylene composition is preferably prepared in a compounding step prior to a pipe extrusion step. It is further disclosed that a peroxide masterbatch was added to induce LCB/cross-linking reaction during compounding.

WO 2016/064984 A1 relates to crosslinked metallocene-catalyzed polyethylene copolymers, and articles (e.g., pipe) made from same. The crosslinked metallocene-catalyzed polyethylene copolymers can be obtained by contacting a polyethylene copolymer base resin with a per-oxide modifier. The peroxide modifier can be employed as a powder, as a master batch, in a carrier (e.g., polypropylene, calcium carbonate, etc.), or combinations thereof.

WO 2017/112642 A1 discloses polyethylene formulations comprising a partially crosslinked multimodal polyethylene composition which can be extruded into various shaped articles, such as, for example, pipes. The polyethylene formulation are obtained by combining a multimodal polyethylene resin with a peroxide masterbatch.

WO 2018/022885 A1 discloses pipes comprising bimodal high molecular weight high density polyethylene which has been extruded in the presence of one or more organic peroxides. In the method for preparing the pipes, a porous polypropylene random copolymer is employed as a carrier for the organic peroxides.

EP 2 966 1223 A1 discloses a multimodal polyethylene composition which can be manufactured into pipes showing improved pressure resistance that exhibit improved pressure and creep resistance. Optionally a free-radical generator, such as a peroxide, may be added to produce a modified polymer composition in order to increase the eta_{0.05} value.

EP 3 450 127 A1 discloses a process for preparing a polyolefin composition comprising supplying a bimodal or multimodal polyolefin in form of a polyolefin powder having a mass-median-diameter D50 in the range from 400 µm to 2500 µm and one or more additives to a mixing device, mixing the polyolefin powder and the additives and transferring the mixture into an extruder device for melting and homogenizing the mixture.

Nonetheless, there is still a need to provide polyethylene compositions comprising multimodal polyethylene which have a high resistance to sagging and which have a reduced gel level.

### SUMMARY OF THE INVENTION

The present disclosure provides a continuous process for preparing a multimodal polyolefin composition comprising one or more antioxidants comprising the steps of
a) preparing a multimodal polyolefin in form of a polyolefin powder having a mass-median-diameter D50 of the polyolefin particles in the range from 300 µm to 2500 µm in a series of two or more polymerization reactors by polymerizing one or more 1-olefins in the presence of an olefin polymerization catalyst at pressures from 0.5 MPa to 10 MPa and temperatures from 30°C to 160°C, the multimodal polyolefin being a multimodal polyethylene;
b) providing an organic peroxide in an amount from 20 ppm to less than 100 ppm, preferably from 25 ppm to 95 ppm, more preferably from 28 ppm to 80 ppm of organic peroxide with respect to the polyolefin powder;
c) mixing the polyolefin powder prepared in step a) and the organic peroxide provided in step b) at a temperature in the range from 10°C to 100°C without melting the polyolefin powder to form a polyolefin peroxide mixture;
d) melting and homogenizing the polyolefin peroxide mixture obtained in step c) within an extruder device wherein at least 90 wt.% of the organic peroxide decomposes and a molten polyolefin composition is formed;
e) adding one or more antioxidants to the molten polyolefin composition obtained in step d) to form a combination of molten polyolefin composition and antioxidant;
f) homogenizing the combination of molten polyolefin composition and antioxidant to form an antioxidant equipped molten polyolefin composition; and
g) pelletizing the antioxidant equipped molten polyolefin composition.

In some embodiments, the multimodal polyolefin in form of a polyolefin powder is prepared in one or more gas-phase polymerization reactors and at least one of the gas-phase polymerization reactors is a multizone circulating reactor in which one polymerization zone is a riser, in which growing polymer particles flow upwards under fast fluidization or transport conditions, and the other polymerization zones are sub-zones of a downcomer, in which the growing polymer particles flow downward in a densified form, wherein the riser and the downcomer are interconnected and polymer particles leaving the riser enter the downcomer and polymer particles leaving the downcomer enter the riser, thus establishing a circulation of polymer particles through the riser and the downcomer.

In some embodiments, the series of polymerization reactors comprises a fluidized-bed reactor upstream of the multizone circulating reactor.

In some embodiments, the olefin polymerization catalyst is a Ziegler- or Ziegler-Natta-catalyst comprising the reaction product of an aluminum alkyl with a titanium compound supported on a magnesium halide.

In some embodiments, the extruder device is a combination of two co-rotating twin-screw extruders, and the polyolefin powder and the organic peroxide are transferred into a first twin-screw extruder, in which step d) is carried out, and the second twin-screw extruder is provided with a stream of the molten polyolefin composition formed in step d) and carries out step f), or the extruder device is a counter-rotating continuous mixer equipped with gear pump or a co-rotating twin screw extruder equipped with gear pump.

In some embodiments, the antioxidant equipped molten polyolefin composition is passed through a melt filter before being pelletized.

In some embodiments, the multimodal polyolefin in form of a polyolefin powder prepared in step a) and the organic peroxide provided in step b) are supplied to a mixing device and the mixing of step c) occurs in the mixing device.

In some embodiments, the multimodal polyolefin in form of a polyolefin powder prepared in step a) is supplied directly to the extruder device or the multimodal polyolefin composition in form of a polyolefin powder prepared in step a) is supplied to a mixing device, mixed therein with one or more additives different from antioxidants and organic peroxides, and the mixture comprising the polyolefin powder and the additives different from antioxidants and organic peroxides is transferred from the mixing device into the extruder device, and the organic peroxide provided in step b) is supplied to the extruder device at a position where the polyolefin powder or the mixture comprising the polyolefin powder and the additives different from antioxidants and organic peroxides is not yet molten.

In some embodiments, the mixing of step c) is carried out in an atmosphere of reduced oxygen content and the oxygen content in the gas phase within the mixing device is less than 5 vol%.

In some embodiments, in step b), the organic peroxide is provided as a liquid or as a component of a liquid or the organic peroxide is provided in form of a mixture of the organic peroxide with a polyolefin powder.

In some embodiments, in step b), the organic peroxide is provided as a liquid or as a component of a liquid and the liquid comprising the organic peroxide is added to the polyethylene powder by passing the liquid with an injection pressure of 0.5 to 4 MPa through a spring injector comprising a preloaded spring.

In some embodiments, the organic peroxide is provided as a peroxide solution having a content of active oxygen in the range from 0.1 wt.% to 10 wt.%.

In some embodiments, the multimodal polyolefin prepared in step a) has a M_{w}/Mₙ from 15 to 40.

In some embodiments, the multimodal polyolefin prepared in step a) is a multimodal polyethylene, preferably a multimodal polyethylene having a density determined according to DIN EN ISO 1183-1:2004 at 23°C from 0.940 g/cm³ to 0.968 g/cm³.

In some embodiments, the present disclosure provides a process for preparing a pipe comprising the steps of
a) preparing a multimodal polyolefin composition by the process of any of claims 1 to 14; and
b) forming the multimodal polyolefin composition into a pipe.

### BRIEF DESCRIPTION OF THE DRAWINGS

Figure 1 shows schematically a reactor set-up for preparing the bimodal or multimodal polyethylenes employed in the process of the present disclosure.
Figure 2 shows schematically a spring injector for adding a liquid comprising an organic peroxide to a polyethylene powder.
Figure 3 shows schematically a set-up for preparing a polyolefin composition according to the present disclosure in which a liquid comprising an organic peroxide is added to a polyolefin powder in a mixing device and a masterbatch of one or more antioxidants is added to the molten and homogenized mixture of polyolefin powder and peroxide solution.
Figure 4 shows schematically a set-up for preparing a polyolefin composition according to the present disclosure in which a liquid comprising an organic peroxide is added to a polyolefin powder in an extruder device and a masterbatch of one or more antioxidants is added to the molten and homogenized mixture of polyolefin powder and peroxide solution..
Figure 5 shows schematically a comparative set-up for preparing a polyolefin composition in which as well a liquid comprising an organic peroxide as a mixture of additive including one or more antioxidants is added to a polyolefin powder in a mixing device.

### DETAILED DESCRIPTION OF THE INVENTION

The present disclosure provides a continuous process for preparing a multimodal polyolefin composition comprising one or more antioxidants. The process comprises as step a) a step of preparing a multimodal polyolefin in form of a polyolefin powder.

Step a) of the process of the present disclosure refers to preparing a multimodal polypol-yethylene by homopolymerizing or copolymerizing ethylene. Preferred comonomers in ethylene polymerization are up to 40 wt.% of C₃-C₈-1-alkenes, preferably 1-butene, 1-pentene, 1-hexene, 1-octene, or mixtures thereof. Particular preference is given to a process in which ethylene is copolymerized with from 0.01 wt.% to 20 wt.%, more preferably from 0.05 wt.% to 12 wt.% of one or more C₃-C₈-1-alkenes. Especially preferred comonomers for the copolymerization of ethylene are 1-hexene and/or 1-butene.

The polyolefins in form of a polyolefin powder according to the present disclosure are multimodal polyolefins. The term "multimodal" may refer to the modality of the molecular weight distribution. Such multimodal polyolefins can be obtained from polymerizing or copolymerizing and one or more olefins in a series of two or more polymerization reactors under different reaction conditions or by employing mixed catalyst system comprising two or more types of polymerization catalysts which produce, under the same polymerization conditions, polyolefins of a different molecular weight. Thus, the "modality" indicates how many different polymerization conditions were utilized in preparing the polyolefin, independently whether this modality of the molecular weight distribution can be recognized as separated maxima in a gel permeation chromatography (GPC) curve or not, or how many different types of polymerization catalysts are comprised in a mixed polymerization catalyst system. Frequently used in the art, and also used herein, the term multimodal can include bimodal. In addition to the molecular weight distribution, the polyolefin polymer can also have a comonomer distribution, wherein preferably the average comonomer content of polymer chains with a higher molecular weight is higher than the average comonomer content of polymer chains with a lower molecular weight. It is however also possible to employ identical or very similar reaction conditions in all polymerization reactors of the series of polymerization reactors and so prepare narrow molecular weight polyolefins. A complication in producing multimodal polyolefins in a series of polymerization reactors operating at different reaction conditions is however that, caused by different residence times of individual polyolefin particles in the different reactor, the composition of the individual polyolefin particles of a polyolefin powder may vary strongly.

All industrially known polymerization methods may be used for the preparation of the multimodal polyolefins. These polymerization methods include solution processes, suspension processes, and gas-phase processes. Processes of this type are generally known to those skilled in the art. Among the polymerization processes mentioned, gas-phase polymerization, in particular in gas-phase fluidized-bed reactors or multi-zone circulating reactors and suspension polymerization, in particular in loop reactors or stirred tank reactors are preferred.

The polymerizations for preparing the multimodal polyolefin in step a) of the process of the present disclosure are operated at pressures from 0.5 MPa to 10 MPa, preferably from 1.0 MPa to 8 MPa and in particular from 1.5 MPa to 4 MPa, wherein these pressures, as all pressures given in the present disclosure, have to be understood as being absolute pressures, i.e. pressure having the dimension MPa (abs). The polymerizations are carried out at temperatures from 30°C to 160°C and preferably from 65°C to 125°C, with temperatures in the upper part of this range being preferred for preparing ethylene polymers of relatively high density and temperatures in the lower part of this range being preferred for preparing ethylene copolymers of lower density.

The multimodal polyolefins in form of a polyolefin powder prepared in step a) of the process of the present disclosure are prepared by polymerizing the one or more 1-olefins in a series of two or more polymerization reactors. Preferably, at least one of the polymerization reactors is a gas-phase polymerization reactor. In preferred embodiments, the multimodal polyolefin is prepared in in a series of two or more gas-phase polymerization reactors, preferably a series of two or more fluidized-bed reactors or a series comprising a multi-zone circulating reactor and one or more different gas-phase polymerization reactors, such as fluidized-bed reactors; or the multimodal polyolefins are prepared in a series of first one or more suspension polymerization reactors, such as loop reactors, and subsequently one or more gas-phase polymerization reactors, such as fluidized-bed reactors.

In preferred embodiments of the present disclosure, at least one of the polymerization reactors of the series of polymerization reactors is a gas-phase polymerization reactor and the gas-phase polymerization reactor comprises a riser unit, in which growing polymer particles flow upwards under fluidization, fast fluidization or transport conditions, and a downcomer, in which growing polymer particles flow downward in a densified form.

The riser unit, in which the growing polymer particles flow upwards, may comprises a fluidized bed of growing polymer particles. The riser unit then operates as thoroughly mixed gas-phase reactor such as a fluidized bed reactor. Fluidized-bed reactors are reactors in which the polymerization takes place in a bed of polymer particles which is maintained in a fluidized state by feeding in a reaction gas mixture at the lower end of a reactor, usually below a gas distribution grid having the function of dispensing the gas flow, and taking off the gas again at its upper end. The reaction gas mixture is then returned to the lower end to the reactor via a recycle line equipped with a compressor and a heat exchanger for removing the heat of polymerization. The velocity of the reaction gas mixture has to be sufficiently high firstly to fluidize the mixed bed of finely divided polymer present in the tube serving as polymerization zone and secondly to remove the heat of polymerization effectively.

When a polymerization unit comprising a fluidized bed of growing polymer particles is employed as the riser unit, the downcomer may be positioned within, around or adjacent to the gas-phase reactor. It is also possible to employ two or more separated polymerization units, in which the growing polymer particles flow downward in a densified form, as the downcomer.

In especially preferred embodiments of the present disclosure, the riser unit is a riser in which an upward movement of growing polymer particles occurs under fast fluidization or transport conditions. Fast fluidization conditions inside the riser are established by feeding a reaction gas mixture at a velocity higher than the transport velocity of the polymer particles. The velocity of the reaction gas mixture is generally comprised between 0.5 and 15 m/s, preferably between 0.8 and 5 m/s. The terms "transport velocity" and "fast fluidization conditions" are well known in the art. For a definition of those terms see, for example, "D. Geldart, Gas Fluidization Technology, page 155 et seq., J. Wiley & Sons Ltd., 1986".

The part of the polymerization reactor in which the growing polymer particles flow downward in a densified form may be called a "downcomer" but may also be designated as a "moving bed" or a "settled bed" unit or reactor. The term "densified form" has to be understood in that the ratio between the mass of polymer and the reactor volume is higher than 80% of the "poured bulk density" of the resulting polymer. Thus, for instance, in the case of a polymer bulk density equal to 420 kg/m³, a "densified form" implies that the polymer mass/reactor volume ratio is at least 336 kg/m³. The "poured bulk density" of a polymer is a parameter well known to the person skilled in the art: it can be measured according to DIN EN ISO 60 : 1999. The density of solid inside the reactor is defined as the mass of polymer per volume of reactor occupied by the polymer.

Typically, a downcomer is a part of the polymerization reactor containing a bed of growing polymer particles, which moves downwards in a substantially plug flow mode. By "plug flow mode", it is meant that there is little or preferably no backmixing of the polymer particles.

For replacing reacted olefins and for controlling the gas flow within the downcomer, gaseous or liquid feed streams may be introduced at one or more positions into the downcomer. The feed streams preferably comprise ethylene and may further comprise one or more comonomers, inert components such as propane, or hydrogen. Depending on the amounts of added gaseous or liquid feed streams to the downcomer and the pressure conditions within the downcomer, the gaseous medium surrounding the polymer particles can be designed to move downwards concurrently with the polymer particles or upward countercurrently to the polymer particles. When feeding liquid streams to the downcomer, these liquid streams preferably vaporize within the downcomer, contributing to the composition of the reaction gas mixture within the downcomer. When operating the downcomer with more than one feed stream, the feeding points for introducing the feed streams into the downcomer are preferably evenly distributed over the height of the downcomer.

In most preferred embodiments of the present disclosure, one of the polymerization reactors is a multizone circulating reactor. Such reactors are, for example, described in WO 97/04015 A1 and WO 00/02929 A1 and have two interconnected polymerization zones, a riser, in which the growing polymer particles flow upward under fast fluidization or transport conditions and a downcomer, in which the growing polymer particles flow in a densified form under the action of gravity. The polymer particles leaving the riser enter the downcomer and the polymer particles leaving the downcomer are reintroduced into the riser, thus establishing a circulation of polymer between the two polymerization zones and the polymer is passed alternately a plurality of times through these two zones. In such polymerization reactors, a solid/gas separator is arranged above the downcomer to separate the polyolefin and reaction gaseous mixture coming from the riser. The growing polyolefin particles enter the downcomer and the separated reaction gas mixture of the riser is continuously recycled through a gas recycle line to one or more points of reintroduction into the polymerization reactor. Preferably, the major part of the recycle gas is recycled to the bottom of the riser. The recycle line is preferably equipped with a compressor and a heat exchanger for removing the heat of polymerization. Preferably, a line for the catalyst feed is arranged on the riser and a polymer discharge system is located in the bottom portion of the downcomer. The introduction of make-up monomers, comonomers, hydrogen and/or inert components may occur at various points along the riser and the downcomer.

According to preferred embodiments of the present disclosure, the reaction gas mixture leaving the riser unit is partially or totally prevented from entering the downcomer for establishing different polymerization conditions between the riser unit and at least a part of the downcomer. This can for example be achieved by feeding a barrier fluid in form of a gas and/or liquid mixture into the downcomer, preferably in the upper part of the downcomer. The barrier fluid should have a suitable composition, different from that of the gas mixture present in the riser unit. The amount of added barrier fluid can be adjusted in a way that an upward flow of gas countercurrent to the flow of the polymer particles is generated, particularly at the top thereof, acting as a barrier to the gas mixture entrained with the particles coming from the riser unit.

The barrier fluid preferably comes from a recycle gas stream and is more preferably obtained by partly condensing the stream. As a consequence, the barrier fluid may contain, besides the monomers to be polymerized, also inert compounds used as a polymerization diluent like nitrogen or alkanes having from 1 to 10 carbon atoms, hydrogen or other components of the reaction gas mixture.

The polymerization in the gas-phase polymerization reactors of the series of polymerization reactors can also be carried out in a condensing or super-condensing mode, in which part of the circulating reaction gas mixture is cooled to below the dew point and returned to the reactor separately as a liquid and a gas-phase or together as a two-phase mixture in order to make additional use of the enthalpy of vaporization for cooling the reaction gas.

In the preferred embodiments of the present disclosure, in which the series of polymerization reactors comprises a gas-phase polymerization reactor comprising a riser unit and a downcomer, the further polymerization reactors of the series of polymerization reactors can be any kind of low-pressure polymerization reactors such as gas-phase reactors or suspension reactors. If the polymerization process of the series of polymerization reactors includes a polymerization in suspension, the suspension polymerization is preferably carried out upstream of the gas-phase polymerization. Suitable reactors for carrying out such a suspension polymerization are for example loop reactors or stirred tank reactors. Suitable suspension media are inter alia inert hydrocarbons such as isobutane or mixtures of hydrocarbons or else the monomers themselves. Such additional polymerization stages, which are carried out in suspension, may also include a pre-polymerization stage. If the multistage polymerization of olefins comprises additional polymerization stages carried out in gas-phase, the additional gas-phase polymerization reactors can be any type of gas-phase reactors like horizontally or vertically stirred gas-phase reactors, fluidized-bed reactors or multizone circulating reactors. Such additional gas-phase polymerization reactors may be arranged downstream or upstream of the gas-phase polymerization reactor. In an especially preferred embodiment of the present disclosure, the gas-phase polymerization reactor comprising the riser unit and the downcomer is part of a series of polymerization reactors in which a fluidized-bed polymerization reactor is arranged upstream of the gas-phase polymerization reactor.

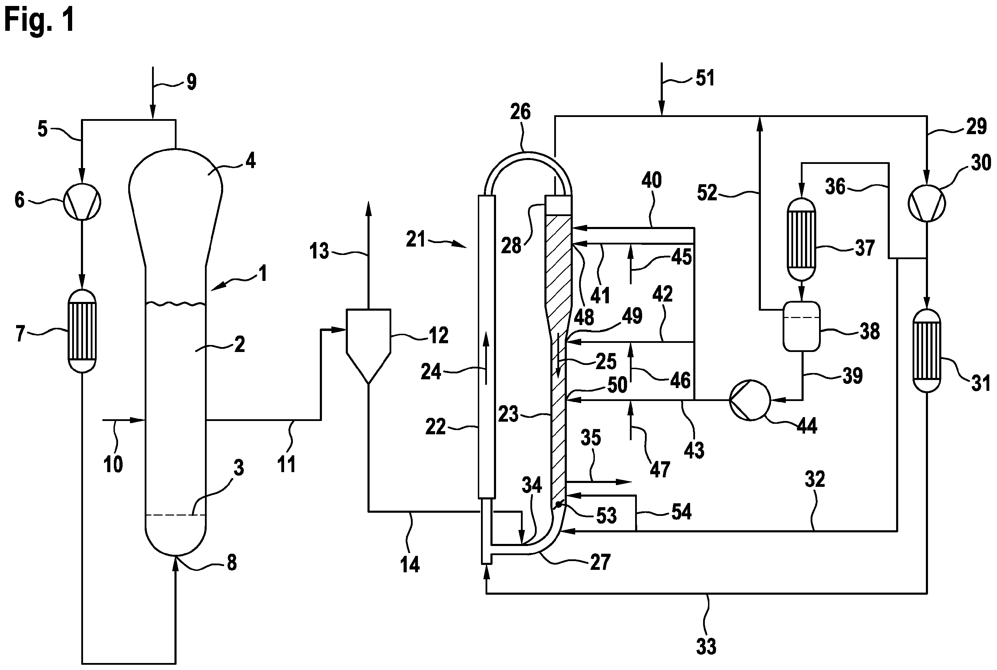

Figure 1 shows schematically a set-up of a series of polymerization reactors comprising a fluidized-bed reactor and a multizone circulating reactor for preparing a multimodal polyolefin according to step a) of the process of the present disclosure.

The first gas-phase reactor, fluidized-bed reactor (1), comprises a fluidized bed (2) of polyolefin particles, a gas distribution grid (3) and a velocity reduction zone (4). The velocity reduction zone (4) is generally of increased diameter compared to the diameter of the fluidized-bed portion of the reactor. The polyolefin bed is kept in a fluidization state by an upward flow of gas fed through the gas distribution grid (3) placed at the bottom portion of the reactor (1). The gaseous stream of the reaction gas mixture leaving the top of the velocity reduction zone (4) via recycle line (5) is compressed by compressor (6), transferred to a heat exchanger (7), in which it is cooled, and then recycled to the bottom of the fluidized-bed reactor (1) at a point below the gas distribution grid (3) at position (8). The recycle gas can, if appropriate, be cooled to below the dew point of one or more of the recycle gas components in the heat exchanger so as to operate the reactor with condensed material, i.e. in the condensing mode. The recycle gas can comprise, besides unreacted monomers, inert condensable gases, such as alkanes, as well as inert non-condensable gases, such as nitrogen. Make-up monomers, hydrogen, and optional inert gases or process additives can be fed into the reactor (1) at various positions, for example via line (9) upstream of the compressor (6). Generally, the catalyst is fed into the reactor (1) via a line (10) that is preferably placed in the lower part of the fluidized bed (2).

The polyolefin particles obtained in fluidized-bed reactor (1) are discontinuously discharged via line (11) and fed to a solid/gas separator (12) in order to avoid that the gaseous mixture coming from the fluidized-bed reactor (1) enters the second gas-phase reactor. The gas leaving solid/gas separator (12) exits the reactor via line (13) as off-gas while the separated polyolefin particles are fed via line (14) to the second gas-phase reactor.

The second gas-phase reactor is a multizone circulating reactor (21) comprising a riser (22) and a downcomer (23) which are repeatedly passed by the polyolefin particles. Within riser (22), the polyolefin particles flow upward under fast fluidization conditions along the direction of arrow (24). Within the downcomer (23) the polyolefin particles flow downward under the action of gravity along the direction of the arrow (25). The riser (22) and the downcomer (23) are appropriately interconnected by the interconnection bends (26) and (27).

After flowing through the riser (22), the polyolefin particles and the reaction gas mixture leave riser (22) and are conveyed to a solid/gas separation zone (28). This solid/gas separation can be effected by using conventional separation means such as, for example, a centrifugal separator like a cyclone. From the separation zone (28) the polyolefin particles enter downcomer (23).

The reaction gas mixture leaving the separation zone (28) is recycled to the riser (22) by means of a recycle line (29), equipped with a compressor (30) and a heat exchanger (31). Between the compressor (30) and the heat exchanger (31), the recycle line (29) splits and the gaseous mixture is divided into two separated streams: line (32) conveys a part of the recycle gas into the interconnection bend (27), while line (33) conveys another part the recycle gas to the bottom of riser (22), so as to establish fast fluidization conditions therein.

The polyolefin particles coming from the first gas-phase reactor via line (14) enter the multizone circulating reactor (21) at the interconnection bend (27) in position (34). The polyolefin particles obtained in multizone circulating reactor (21) are continuously discharged from the bottom part of downcomer (23) via the discharge line (35).

A part of the gaseous mixture leaving the separation zone (28) exits the recycle line (29) after having passed the compressor (30) and is sent through line (36) to the heat exchanger (37), where it is cooled to a temperature at which the monomers and the optional inert gas are partially condensed. A separating vessel (38) is placed downstream of the heat exchanger (37). The separated liquid is withdrawn from the separating vessel (38) via line (39) and fed to downcomer (23) through lines (40), (41), (42) and (43) by means of a pump (44), wherein the feed stream introduced via line (40) is supplied to generate the barrier for preventing the reaction gas mixture of the riser (22) from entering the downcomer (23). Make-up monomers, make-up comonomers, and optionally inert gases and/or process additives can be introduced via lines (45), (46) and (47) into lines (41), (42) and (43) and then fed into the downcomer (23) at monomer feeding points (48), (49) and (50). Make-up monomers, make-up comonomers, and optionally inert gases and/or process additives can further be introduced into the recycle line (29) via line (51). The gaseous mixture obtained as gas-phase in the separating vessel (38) is recirculated to recycle line (29) through line (52).

The bottom of the downcomer (23) is equipped with a control valve (53) having an adjustable opening for adjusting the flow of polyolefin particles from downcomer (23) through the interconnection bend (27) into the riser (22). Above the control valve (53), amounts of a recycle gas mixture coming from the recycle line (29) through line (54) are introduced into the downcomer (23) to facilitate the flow of the polyolefin particles through the control valve (53).

The polymerization for preparing the multimodal polyolefin can be carried out using all customary olefin polymerization catalysts. That means the polymerization can be carried out, for example, using Phillips catalysts based on chromium oxide, using titanium-based Ziegler- or Ziegler-Natta-catalysts, using single-site catalysts, or using mixtures of such catalysts. The preparation and use of these catalysts for olefin polymerizations are generally known. In preferred embodiments of the present disclosure, the polymerization catalyst is a Ziegler- or Ziegler-Natta-catalyst comprising the reaction product of an aluminum alkyl with a titanium compound supported on a magnesium halide.

The multimodal polyolefin prepared in step a) of the process of the present disclosure are obtained in form of a polyolefin powder, that means in form of relatively small particles. The mass-median-diameter D50 of these polyolefin particles is in the range from 300 µm to 2500 µm, preferably from 400 µm to 2300 µm, and in particular from 800 µm to 2100 µm, determined by dry sieving analysis according to DIN 53477 (November 1992).

The multimodal polyolefins prepared in step a) of the process of the present disclosure are preferably multimodal polyethylenes have a density from 0.940 to 0.968 g/cm³. Preferably, the density is in the range from 0.945 to 0.965 g/cm³ of and in particular in the range of from 0.945 to 0.955 g/cm³. The density has to be understood as being the density determined according to DIN EN ISO 1183-1:2004, Method A (Immersion) with compression molded plaques of 2 mm thickness which were pressed at 180°C, 20 MPa for 8 minutes with subsequent crystallization in boiling water for 30 minutes.

Preferred polyolefins prepared in step a) of the process of the present disclosure are multimodal polyethylenes which have a melt flow rate MFR_{21.6} at 190°C under a load of 21.6 kg, determined according to DIN EN ISO 1133:2005 condition G, from 0.5 to 300 g/10 min, more preferably from 1 to 100 g/10 min, even more preferably from 1.2 to 100 g/10 min and in particular from 1.5 to 50 g/10 min. Preferred multimodal polyethylenes have a M_{w}/Mₙ from 15 to 40, in particular from 20 to 35, where M_{w} is the weight average molecular weight and Mₙ is the number average molecular weight, measured by GPC (Gel Permeation Chromatography). The GPC is preferably a high-temperature gel permeation chromatography carried out as described in ISO 16014-1, -2, -4, issues of 2003 in which 1,2,4-trichlorobenzene (TCB) is used as solvent, the temperature of apparatus and solutions are 135°C and an infrared detector capable for use with TCB is employed as a concentration detector.

In step b) of the process of the present disclosure, an organic peroxide is provided in an amount from 20 ppm to less than 100 ppm of organic per-oxide with respect to the polyolefin powder. Examples of suitable organic peroxides are dicumyl peroxide, di-tert-butyl peroxide, tert-butylperoxybenzoate, 2,5-dimethyl-2,5-di(tert-butylperoxy)hexane, 3,6,9-triethyl-3,6,9-trimethyl-1,2,4,5,7,8-hexoxonane, representatives of 3,6,9-trimethyl-3,6,9-tris(alkyl)-1,2,4,5,7,8-hexoxon-anes in which the alkyl radical is propyl or ethyl, tert-butyl peroxyneodecanoate, tert-amyl peroxy-pivalate, 1,3-bis(tert-butylperoxyisopropyl)benzene, and the like. Preferably, the organic peroxide is 2,5-dimethyl-2,5-di(tert-butylperoxy)hexane, 3,6,9-triethyl-3,6,9-trimethyl-1,2,4,5,7,8-hexoxon-ane, or a representative of 3,6,9-trimethyl-3,6,9-tris(alkyl)-1,2,4,5,7,8-hexoxonanes in which the alkyl radical is propyl or ethyl.

In preferred embodiments of the present disclosure, the organic peroxide is employed in form of a polyolefin mixture, which is preferably prepared by adding the organic peroxide in pure form or as a solution in a diluent like a hydrocarbon to a polyolefin powder. Preferred polyolefin mixtures have a content of the organic peroxide in the polyolefin mixture in the range from 0.5 to 25 wt.%, preferably from 1 to 20 wt.%, and more preferably from 2 to 10 wt.%.

In especially preferred embodiments of the present disclosure, a liquid comprising an organic peroxide is provided in step b) of the process of the present disclosure. The liquid comprising an organic peroxide can be a liquid peroxide or the liquid comprising an organic peroxide can be a solution of a peroxide. Preferably, the liquid comprising an organic peroxide is a solution of a peroxide. The liquid comprising an organic peroxide is provided in an amount from 20 ppm to less than 100 ppm, preferably from 25 ppm to 95 ppm, more preferably from 28 ppm to 80 ppm or from 40 ppm to 95 ppm, and in particular from 45 ppm to 95 ppm of organic peroxide with respect to the polyolefin powder. In other words, the liquid comprising an organic peroxide is added in such an amount that corresponds to an addition of from 20 ppm to less than 100 ppm, preferably 25 ppm to 95 ppm, more preferably from 28 ppm to 80 ppm or from 40 ppm to 95 ppm; and in particular from 45 ppm to 95 ppm of the organic peroxide. Preferably, the organic peroxide is employed in form of a solution in a diluent like a hydrocarbon. Preferred peroxide solutions have a content of active oxygen in the range from 0.1 wt.% to 10 wt.%, preferably from 0.2 wt.% to 5 wt.%, more preferably from 0.3 wt.% to 2 wt.%, and in particular from 0.5 wt.% to 1 wt.%.

Some steps for preparing the polyolefin compositions comprising one or more antioxidants of the present disclosure are carried out in an extruder device. Suitable extruder devices for the process of the present disclosure are extruders or continuous mixers. These extruders or mixers can be single- or two-stage machines which melt and homogenize the polyethylene composition. Examples of extruders are pin-type extruders, planetary extruders or co-rotating disk processors. Other possibilities are combinations of mixers with discharge screws and/or gear pumps. Preferred extruders are screw extruders and in particular extruders constructed as twin-screw machine. Particular preference is given to twin-screw extruders and continuous mixers with discharge elements and especially to continuous mixers with counter-rotating twin rotor or the extruder device comprises at least one co-rotating twin screw extruder. Machinery of this type is conventional in the plastics industry and is manufactured by, for example, Coperion GmbH, Stuttgart, Germany; KraussMaffei Berstorff GmbH, Hannover, Germany; The Japan Steel Works LTD., Tokyo, Japan; Farrel Corporation, Ansonia, USA; or Kobe Steel, Ltd., Kobe, Japan. Suitable extruder devices are further usually equipped with units for pelletizing the melt, such as underwater pelletizers.

In especially preferred embodiments of the present disclosure, the extruder device is a combination of two co-rotating twin-screw extruders in which the mixture comprising the polyolefin powder and the organic peroxide is transferred into a first twin-screw extruder, the second twin-screw extruder is provided with a molten polymer stream coming from the first twin-screw extruder and the second twin-screw extruder completes the homogenization process. In other especially preferred embodiments of the present disclosure, the polyethylene compositions are prepared in a counter-rotating continuous mixer equipped with gear pump or in a co-rotating twin screw extruder equipped with gear pump.

Step c) of the process of the present disclosure provides mixing the polyolefin powder prepared in step a) and the organic peroxide in step b) at a temperature in the range from 10°C to 100°C without melting the polyethylene powder. Preferably, the mixing of step c) is carried out at a temperature in the range from 20°C to 90°C, more preferably from 60°C to 80°C.

Preferably, the mixing of step c) is carried out in an atmosphere of reduced oxygen content which is preferably achieved by injecting nitrogen into the mixing device. Preferably, the oxygen content in the gas phase within the mixing device is less than 5 vol%, more preferably less than 1 vol% and in particular less than 0.2 vol%.

In preferred embodiments of the present disclosure, the mixing of step c) is carried out in a mixing device. In these embodiments, the multimodal polyolefin in form of a polyolefin powder prepared in step a) and the organic peroxide provided in step b) are supplied to the mixing device for being mixed. The mixing device can be any apparatus which allows dry-blending of particles. The mixing device can operate continuously or discontinuously. Preferably, the mixing device operates continuously.

Preferred dry-blending devices are paddle mixers comprising one or two horizontally orientated rotating shafts, more preferably two horizontally orientated counter-rotating shafts. The shafts are equipped with paddles of an appropriate geometry. The rotating shafts move the composition of polyethylene powder and additives horizontally along the axis of the shafts and at the same time mix the composition intensively. Such paddle mixers are commercially available, for example, from Köllemann GmbH, Adenau, Germany or J. Engelsmann AG, Ludwigshafen, Germany. Preferred mixing devices are further vertical batch mixer such a Henschel-Mixers^{®} available from Zeppelin Systems GmbH, Kassel, Germany. Preferred dry-blending devices are also single screw conveyors equipped with blending elements. Preferably, such blending elements are amendable devices such as adjustable paddles or slotted flights to allow controlling the level of blending.

In other preferred embodiments of the present disclosure, the mixing of step c) is carried out in the extruder device. In these embodiments, the multimodal polyolefin in form of a polyolefin powder prepared in step a) and the organic peroxide provided in step b) are supplied to the extruder device for being mixed. Preferably, the polyolefin powder is transferred to a hopper of the extruder device and then introduced from the hopper into the extruder device. Preferably, the transfer of the polyolefin powder into the extruder device occurs by gravity. Preferably, the introduction of the polyolefin powder into the extruder device occurs in an atmosphere of reduced oxygen content which is preferably achieved by injecting nitrogen into the hopper. Preferably, the oxygen content in the gas phase within the hopper is less than 5 vol%, more preferably less than 1 vol% and in particular less than 0.2 vol%.

In preferred embodiments of the present disclosure, the organic peroxide is provided in liquid form and the liquid comprising the organic peroxide is added to the polyethylene powder by passing the liquid with an injection pressure of from 0.5 to 4 MPa, more preferably from 1 to 2 MPa, through a spring injector comprising a preloaded spring and feeding the liquid into the mixing device or into the extruder device.

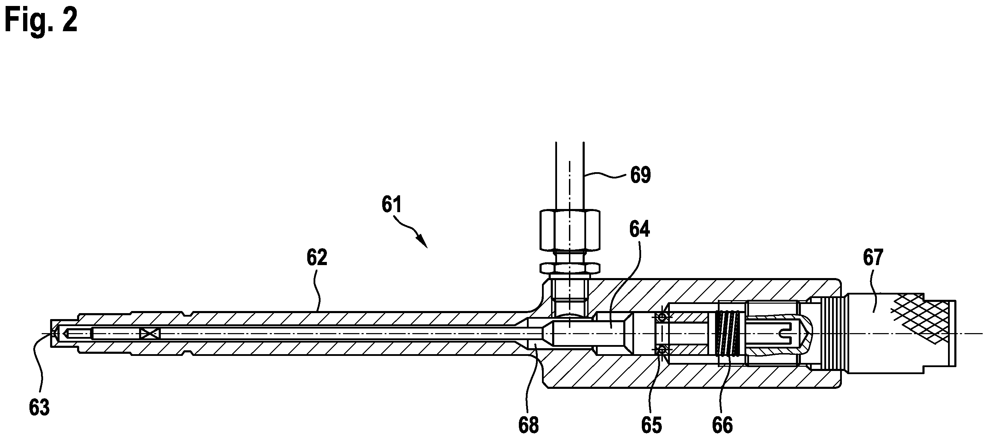

Figure 2 shows schematically such a spring injector for adding a liquid comprising an organic peroxide to a polyethylene powder. The spring injector (61) is composed of a body (62) including an injection orifice (63), an internal needle (64), a sealing device (65), an compression spring (66), and a compression adjustment knob (67) used to set the spring preload and contains an injection chamber (68). A liquid comprising an organic peroxide is continuously fed through feeding pipe (69) into the injection chamber (68). Compression spring (66) pushes the needle (64) against the injection orifice (63) according to the preload of compression spring (66). Once the pressure within the injection chamber (68) overcomes the preload on the compression spring (66), the peroxide solution is finely sprayed over the polyethylene powder. Additionally, the preload of the compression spring (66) prevents that powdery material, such as polyethylene fines or additives may enter into the injection chamber (68) causing potential blockings.

Within the extruder device, in step d), the mixture comprising the polyolefin powder and the organic peroxide is melted and homogenized to form a molten polyethylene composition. This occurs preferably by applying heat and mechanical energy to the polyolefin peroxide mixture. The conditions within the extruder device and the chemical structure of the organic peroxide are selected in a way that at least 90 wt.%, more preferably at least 95 wt.% and in a particular from 98 wt.% to 100 wt.% of the organic peroxide decomposes.

Subsequently, in step e) of the process of the present disclosure, one or more antioxidants are added to the molten polyolefin composition obtained in step d) to form a combination of molten polyolefin composition and antioxidant.

Subsequent step f) of the process of the present disclosure is a step of homogenizing the combination of molten polyolefin composition and antioxidant to form an antioxidant equipped molten polyolefin composition. Step f) results in a further homogenization of the polyolefin melt as such and also provides a uniform distribution of the one or more antioxidants within the polyethylene melt.

In preferred embodiments of the present disclosure, the extruder device is a combination of two co-rotating twin-screw extruders, and the polyolefin powder and the organic peroxide are transferred into a first twin-screw extruder, in which step d) is carried out, and the second twin-screw extruder is provided with a stream of the molten polyolefin composition formed in step d) in the first twin-screw extruder and carries out step f). In other preferred embodiments of the present disclosure, the extruder device is a counter-rotating continuous mixer equipped with gear pump or a co-rotating twin screw extruder equipped with gear pump.

Preferably, the specific energy, i.e. the combined amount of heat and mechanical energy per amount of material being processed, which is applied in steps d) and f) is from 120 kWh/t to 350 kWh/t, more preferably from 160 kWh/t to 300 kWh/t, and in particular from 200 kWh/t to 260 kWh/t.

In preferred embodiment of the present disclosure, the antioxidant equipped molten polyolefin composition is passed through a melt filter before being pelletized. Suitable melt filters comprise one or more active screens having a mesh opening from 50 µm to 400 µm. Especially preferred melt filters are melt filters which comprise one or more active screens having a mesh opening from 75 µm to 200 µm or melt filters which comprises at least two screens having a mesh opening from 205 µm to 350 µm. Such combinations of screens are, for example, described in WO 2012/152775 A1.

Subsequent step g) of the process of the present disclosure provides pelletizing the antioxidant equipped molten polyethylene composition comprising the multimodal polyolefin and the one or more antioxidants. Step g) accordingly transforms the molten polyethylene composition into pellets.

Besides adding antioxidants and organic peroxides, it is standard practice in the preparation of polyolefin compositions to also add further additives. Suitable additional types of additives for preparing polyolefin compositions are, for example, melt stabilizers, light stabilizers, acid scavengers, lubricants, processing aids, antiblocking agents, slip agents, antistatics agents, antifogging agents, pigments or dyes, nucleating agents, flame retardants or fillers. It is common that several additives are added to the polyethylene compositions. The multiple additives can be different types of additives. It is however also possible that several representatives of one type of additives are added to one polyethylene composition. Additives of all these types are generally commercially available and are described, for example, in Hans Zweifel, Plastics Additives Handbook, 5th Edition, Munich, 2001.

In preferred embodiments of the process of the present disclosure, the further additives which are different from antioxidants and organic peroxides are added in step e) together with the one or more antioxidants to the molten polyolefin composition obtained in step d).

In other preferred embodiments of the process of the present disclosure, as well the multimodal polyolefin in form of a polyolefin powder prepared in step a) as the further additives which are different from antioxidants and organic peroxides are supplied to a mixing device and are mixed therein to form a polyolefin powder mixture without melting the polyolefin powders. In these embodiments, it is possible that also the organic peroxide provided in step b) is supplied to the mixing device. That means, the mixing in the mixing device represents step c) of the process of the present disclosure and the further additives which are different from antioxidants and organic peroxides are added to the polyolefin powder together with the organic peroxides. It is however also possible that the organic peroxide is supplied to the extruder device and no organic peroxide is supplied to the mixing device, and the mixing of the further additives which are different from antioxidants and organic peroxides and the polyolefin powder in the mixing device results a polyolefin powder additive mixture which is transferred from the mixing device into the extruder device. That means, according to this possibility of the process of the preset disclosure, step c) of the process of the present disclosure is a mixing of the organic peroxide provided in step b) with the polyolefin powder additive mixture obtained in the mixing device within the extruder device at a position where the polyolefin powder additive mixture is not yet molten.

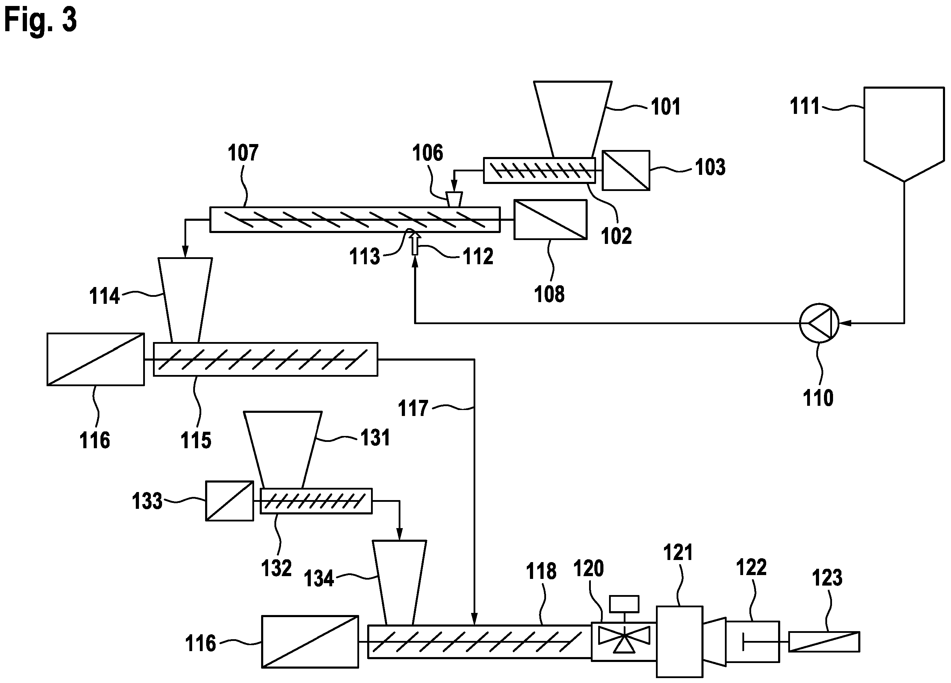

Figure 3 shows schematically a set-up for preparing a polyolefin composition according to the present disclosure in which a liquid comprising an organic peroxide is added to a polyolefin powder in a mixing device and a masterbatch of one or more antioxidants is added to the molten and homogenized mixture of polyolefin powder and peroxide solution.

Polyolefin powder is provided to hopper (101) of a dosing device (102) being operated by a motor (103). Dosing device (102) feeds the polyolefin powder to a hopper (106) of a screw conveyor (107) being operated by a motor (108). A peroxide solution is transferred by a pump (110) from a storage vessel (111) to the screw conveyor (107) and injected through injector (112) into the screw conveyor (107) at a position (113) downstream of hopper (109).

Screw conveyor (107) feeds the mixture of polyolefin powder and peroxide solution to a hopper (114) of a first extruder (115) being operated by a motor (116). Within extruder (115), the mixture of polyolefin powder and peroxide solution is melted and homogenized and the peroxide decomposes.

Extruder (115) feeds the molten mixture of polyolefin powder after the decomposition of the organic peroxide via a line (117) into a second extruder (118) being operated by a motor (119). A masterbatch prepared from one or more antioxidants and the polyolefin powderis provided to hopper (131) of dosing device (132) being operated by a motor (133) and dosing device (132) feeds the masterbatch to a hopper (134) of the second extruder (118). Within extruder (118), the masterbatch feed to hopper (134) is melted and the mixture of the molten masterbatch and the melt provided by extruder (115) is homogenized. The homogenized melt is passed through a startup valve (120) and a melt filter (121) and transferred into an underwater pelletizer (122) operated by a motor (123) for forming pellets.

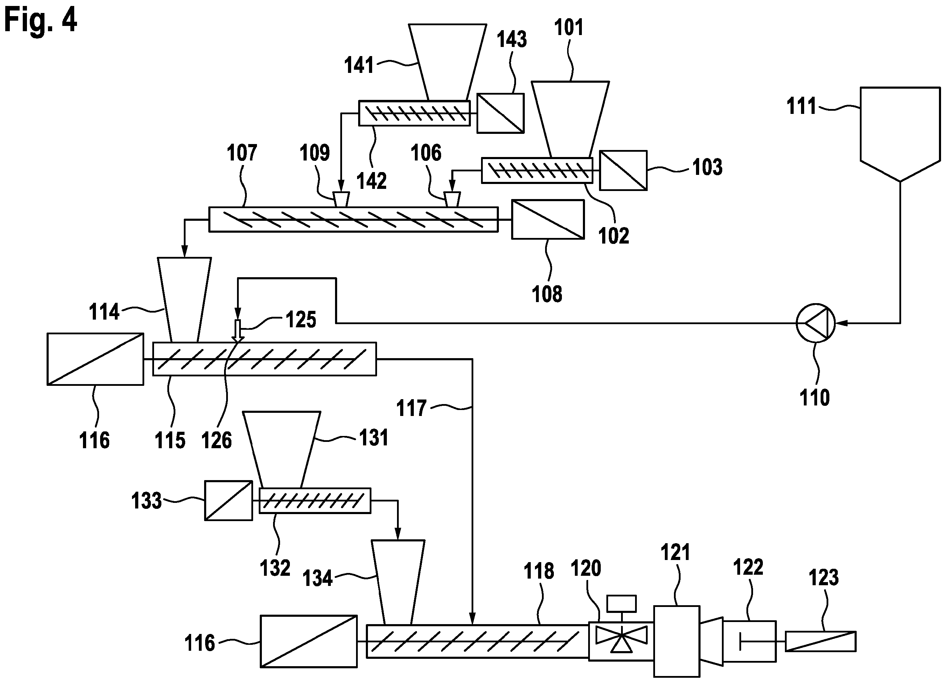

Figure 4 shows schematically a set-up for preparing a polyolefin composition according to the present disclosure in which a liquid comprising an organic peroxide is added to a polyolefin powder in an extruder device and a masterbatch of one or more antioxidants is added to the molten and homogenized mixture of polyolefin powder and peroxide solution.

The set-up for preparing a polyolefin composition shown in Figure 4 is identical with the set-up for preparing a polyolefin composition shown in Figure 3 except that the peroxide solution is transferred by pump (110) from storage vessel (111) to the first extruder (115) and injected through injector (125) into extruder (115) at a position (126) downstream of hopper (114) where the polyolefin powder is not yet molten. Furthermore, a mixture of additives which are neither an organic peroxide nor an antioxidant is provided to hopper (141) of a further dosing device (142) being operated by a motor (143). Dosing device (142) feeds the mixture of additives which are neither an organic peroxide nor an antioxidant to a hopper (109) of screw conveyor (107) which is located downstream of hopper (106).

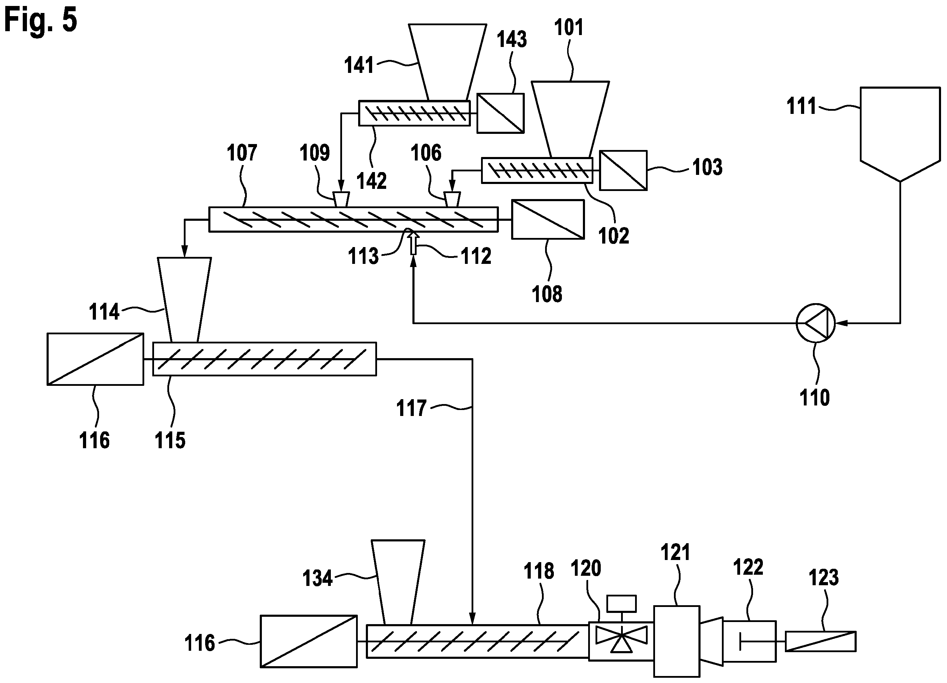

Figure 5 shows schematically a comparative set-up for preparing a polyolefin composition in which as well a liquid comprising an organic peroxide as a mixture of additive including one or more antioxidants is added to a polyolefin powder in a mixing device.

The process of the present disclosure allows preparing polyolefin compositions comprising multimodal polyolefin from polyolefin powders having a mass-median-diameter D50 of the polyolefin particles in the range from 400 µm to 2500 µm which have a superior combination of properties, including a good sagging behavior of pipes prepared from these polyolefin compositions and a low content of gels. Furthermore, the process can be carried out continuously in an economical manner.

In another aspect, the present disclosure provides a process for preparing a pipe comprising the steps of a) preparing a polyolefin composition by a process according to the present disclosure and b) forming the polyolefin composition into a pipe. The pipe is preferably a pipe having a SAG value of from 10 to 17.

### EXAMPLES

The melt flow rate MFR₅ was determined according to DIN EN ISO 1133-1:2012-03 at a temperature of 190 °C under a load of 5 kg.

The SAG values were determined in a rotational parallel plate rheometer with a shear stress of 300 Pa for 5200 seconds at 230°C with plate opening of 1 mm. The SAG values are defined as 1/10^{th} of a percent of creep strain measured at the end of the test. Lower SAG values correspond to a more uniform pipe thickness.

The gel count and gel area were determined by preparing a cast film, analyzing the film defects by means of an optical scanning device and classifying and counting the film defects according to their size (circle diameter). The films were prepared by an extruder (type Collin 25) equipped with a chill roll and winder (model Collin Chill Roll 144/230), and analyzed by an optical film surface analyzer with flash camera system, model FSA100 (produced by OCS Optical Control Systems GmbH, Witten, Germany). The apparatus had the following characteristics
- screw diameter: 25 mm;
- screw length: 25 D;
- compression ratio: 3.5:1;
- screw layout 27 D: 9 D feeding, 7 D compression, 9 D metering;
- die width (slit die): 150 mm;
- resolution: 25 µm x 25 µm;
and was operated under the following conditions
- T 1 200°C;
- T2 210°C;
- T3 220°C;
- T 4,5 (adapter) 230°C ;
- T 6,7,8 (die) 240°C;
- take off speed 3.0 m/min;
- screw speed to be adjusted to film thickness 50 µm;
- throughput 1.0 to 1.5 kg/h (target 1.15 kg/h);
- air shower ON,
- chill roll temperature 60°C;
- camera threshold threshold 1: 50% - threshold 2: 45%.
For starting the measurement, extruder and take off unit were set to the specified conditions and started with a material having a known gel level. The film inspection software was started when the extruder showed steady conditions of temperature and melt pressure. After having operated the extruder with the starting material for at least half an hour or after the gel count having reached the known gel level, the first sample to measure was fed to the extruder. After having reached a stable gel level for 45 minutes the counting process was started until the camera had inspected an area of at least 3 m² of film. Thereafter the next sample was fed to the extruder and after having reached again a stable gel count for 45 minutes the counting process for the next sample was started. The counting process was set for all samples in a way that the camera inspected an area of at least 3 m² of film and the number of measured defects per size-class was normalized to 1 m² of film.

The determination of the particle size distribution of the produced polyolefin powder was carried out by dry sieving analysis according to DIN 53477 (November 1992) using a AS 200 control vibratory sieve shaker (Retsch GmbH, Haan, Germany) with a set of 7 calibrated sieves (125 µm, 250 µm, 500 µm, 710 µm, 1000 µm, 1400 µm, and 2000 µm). The mass-median-diameter D50 of the polyolefin particles was obtained by calculating the particle size distribution using the software Easy Sieve 4.0 of the apparatus, after weighting the fractions on each sieve.

### Example 1

A polyethylene was prepared in a series of a fluidized-bed reactor and a multizone circulating reactor (MZCR) having two interconnected reaction zones as shown in Figure 1.

12 g/h of a Ziegler-Natta catalyst, which was prepared according to Example 6 of WO2018/114453 A1, were fed using 0.7 kg/h of liquid propane to a first stirred precontacting vessel, into which additionally triisobutylaluminum (TIBA) and diethylaluminum chloride (DEAC) were dosed. The weight ratio of TIBA to DEAC was 7:1. The weight ratio of the aluminum alkyls to the catalyst solid was 5:1. The first precontacting vessel was kept at 50°C with a residence time of 30 minutes. The catalyst suspension of the first precontacting vessel was continuously transferred to a second stirred precontacting vessel, which was operated with a residence time of 30 minutes and kept at 50°C. The catalyst suspension was then transferred continuously to a fluidized-bed reactor (1) via line (10).

In the fluidized-bed reactor (1), ethylene was polymerized in the presence of propane as an inert diluent using hydrogen as molecular weight regulator. 50 kg/h of ethylene and 230 g/h of hydrogen were fed to the fluidized-bed reactor (1) via line (9). No comonomer was added. The polymerization was carried out at a temperature of 80°C and a pressure of 2.9 MPa.

The polyethylene obtained in the fluidized-bed reactor (1) had an MFR_{2.16} of 80 g/10 min and a density of 0.967 g/cm³.

The polyethylene obtained in the fluidized-bed reactor (1) was continuously transferred to a multizone circulating reactor (21), which was operated at a pressure of 2.5 MPa and a temperature of 80°C measured at the beginning of line (29) where the reaction gas mixture has just left separation zone (28). The riser (22) had an internal diameter of 200 mm and a length of 19 m. The downcomer (23) had a total length of 18 m, divided into an upper part of 5 m with an internal diameter of 300 mm, a lower part of 13 m with an internal diameter of 150 mm and in-between the upper part and the lower part a conical part having a length of 0.43 m. The final polymer was discontinuously discharged via line (35).

50 kg/h of a liquid stream were fed as barrier fluid into the upper part of the downcomer (23) via line (40). The liquid for generating the barrier originated from partially condensing recycle gas mixture in heat exchanger (37) at working conditions of 60°C and 2.5 MPa and separating liquid and gaseous components in separating vessel (38). The liquid barrier fluid had a composition that the gas produced by vaporizing the barrier fluid had 4.2 vol.% ethylene, 0.02 vol.% hydrogen, 0.6 vol.% 1-hexene and 95.18 vol.% propane.

Additional monomers were fed to the downcomer at three monomer feeding points below the barrier. The combined quantity of fresh monomers fed into the downcomer (23) were 20 kg/h of ethylene and 1.7 kg/h of 1-hexene. Additionally, 5 kg/h of propane, 25.5 kg/h of ethylene and 1.3 g/h of hydrogen were fed through line (51) into the recycle line (29).

Of the polyethylene finally obtained in the series of the fluidized-bed reactor (1) and the multizone circulating reactor (21), 51 % by weight were produced in the fluidized-bed reactor (1) and 49 % by weight were produced in the multizone circulating reactor (21).

The finally obtained polyethylene had an MFR₅ of 0.21 g/10 min and a density of 0.948 g/cm³. The mass-median-diameter D50 of the polyethylene powder was 1624 µm.

### Example 2

The polyethylene powder prepared in Example 1 was metered as shown in Figure 3 at a feeding rate of 180.93 kg/h to a screw conveyor provided by Somef Officina Meccanica E Fonderia, Occhiobello, Italia. In addition, an homogeneous solution of 8 wt.% 2,5-dimethyl-2,5-di-(tert.-bu-tylperoxy)-hexane (Peroxan HX supplied by PERGAN GmbH, Bocholt, Germany) and 92 wt.% paraffinic oil OB 22 AT (supplied by Conqord Oil S.R.L., Castellar Guidobono, Italy), resulting in a solution containing 0.808 wt.% of active oxygen, was metered to the screw conveyor by a liquid dosing pump provided by Lewa GmbH, Leonberg, Germany using a liquid injector as shown in Figure 2 provided by Coperion GmbH, Stuttgart, Germany with an injection pressure of 1 MPa. The added amount of the peroxide solution was at 500 ppm by weight (corresponding to 40 ppm by weight of 2,5-dimethyl-2,5-di-(tert.-butylperoxy)-hexane) with respect to the final polyethylene composition. For preventing the presence of oxygen, nitrogen was injected into the screw conveyor at a feed rate of 0.5 m³/h.

The homogenous mixture of polyethylene powder and peroxide generated by the screw conveyor mixer was then fed to the feeding hopper of the twin-screw extruder ZSK 50 of a ZSK NT 50/58 extrusion line (Coperion GmbH, Stuttgart, Germany) comprising a first twin-screw extruder ZSK 50 and a second twin-screw extruder ZSK 58. In the ZSK 50 extruder, the mixture of polyethylene powder and peroxide was melted and homogenized.

To provide the polyethylene powder with additives, Songnox 1010 (supplied by SONGWON Industrial Co., Ltd., Ulsan, South Korea), Irgafos 168 (supplied by BASF SE, Ludwigshafen, Germany), and Calcium Stearate "M" (supplied by So.G.I.S. Industria Chimica Spa, Sospiro, Italy) were extruded by a Berstorff ZE25 twin screw extruder (KraussMaffei Group GmbH, Munich, Germany) to form an homogeneous masterbatch, composed of 80% of powder prepared in Example 1 and 20% of additives. The obtained masterbatch of additives was fed as shown in Figure 3 directly to the ZSK 58 twin screw extruder, the second stage of the ZSK NT 50/58 extrusion line, with a feeding rate of 4.07 kg/h. The amounts of added additives correspond to a content of additives in the final polyethylene composition of 1600 ppm by weight Songnox 1010, 1600 ppm by weight Irgafos 168, 1200 ppm by weight Calcium Stearate M.

In the extruder ZSK 58, the mixture of masterbatch and polyethylene melt provided from the ZSK 50 extruder was then subjected to further homogenization and melt filtering steps and finally pelletized using a Filtec UW50 underwater pelletizing system (Filtec srl, Badia Polesine, Italy). For melt filtering, the melt was passed through a screen pack composed of three 60 mesh metallic nets and a 20 mesh metallic net acting as mechanical support.

The applied operating conditions and the results of the characterizations of the obtained pellet samples are indicated in Table 1.

### Comparative Example A

The process of Example 2 was repeated at the same conditions except that not a masterbatch of the additives was first prepared and the masterbatch was fed to the ZSK 58 twin screw extruder as shown in Figure 3, but that according to the set-up shown in Figure 5 the Songnox 1010, the Irgafos 168, and the Calcium Stearate "M" were mixed by a Mixaco LAB high speed mixer (MIXACO Maschinenbau, Neuenrade, Germany) to form an homogeneous powder premix and the obtained additive powder premix, the polyethylene powder, and the peroxide solution were all metered to the screw conveyor, at two different feeding points, and intimately mixed therein. The homogenous mix of polyethylene powder, additives and peroxide generated by the screw conveyor mixer was then fed to the feeding hopper of the ZSK 50 extruder of the ZSK NT 50/58 extrusion line. The content of additives in the final polyethylene composition was the same as that of Example 2, as well as the added amount of 2,5-dimethyl-2,5-di-(tert.-butylperoxy)-hexane, which was 40 ppm by weight also in this case.

The applied operating conditions and the results of the characterizations of the obtained pellet samples are indicated in Table 1.

### Comparative Example B

The process of Comparative Example A was repeated at the same conditions except that the added amount of 2,5-dimethyl-2,5-di-(tert.-butylperoxy)-hexane was at 80 ppm by weight (corresponding to 1000 ppm by weight of peroxide solution) with respect to the final polyethylene composition.
The applied operating conditions and the results of the characterizations of the obtained pellet samples are indicated in Table 1.

**Table 1**

| | Example 2 | Comparative Example A | Comparative Example B |
|---|---|---|---|
| Peroxide [ppm by weight] | 40 | 40 | 80 |
| Production rate [kg/h] | 185 | 185 | 185 |
| Specific production rate [kg/h/dm³] | 949 | 949 | 949 |
| ZSK 50 screw speed [rpm] | 280 | 280 | 280 |
| ZSK 58 screw speed [rpm] | 100 | 100 | 100 |
| Melt temperature at end of ZSK 50 [°C] | 241 | 238 | 239 |
| Melt temperature at end of ZSK 58 [°C] | 298 | 294 | 297 |
| ZSK NT 50/58 specific energy [kWh/t] | 293 | 289 | 286 |
| MFR₅ [g/10 min] | 0.14 | 0.22 | 0.17 |
| SAG value | 11.8 | 21.9 | 12.8 |
| Gel > 700 µm [1/m²] | 13 | 49 | 69 |

The comparison between Example 2 and Comparative Example A shows that preparing a multimodal polyethylene composition according to the process of the present disclosure by adding the antioxidants Songnox 1010 and Irgafos 168 to a molten polyethylene composition which is obtained from melting and homogenizing a mixture of a multimodal polyethylene in form of a polyethylene powder and an organic peroxide results in a multimodal polyethylene composition which has a very low level of large gels and which allows to prepare pipes have a high resistance to sagging. In contrast, when using the same multimodal polyethylene powder and the same amounts of peroxide and antioxidants but adding the antioxidants together with the peroxide to the polyethylene powder, the sagging behavior is drastically deteriorated and the amount of large gels has increased. The comparison between Comparative Example A and Comparative Example B further shows that increasing the amount peroxide at identical process conditions improves the resistance to sagging, however at the cost of an even increased level of large gels.

## Claims

1. A continuous process for preparing a multimodal polyolefin composition comprising one or more antioxidants comprising the steps of
a) preparing a multimodal polyolefin in form of a polyolefin powder having a mass-median-diameter D50 of the polyolefin particles in the range from 300 µm to 2500 µm, as determined according to the method disclosed in the description, in a series of two or more polymerization reactors by polymerizing one or more 1-olefins in the presence of an olefin polymerization catalyst at pressures from 0.5 MPa to 10 MPa and temperatures from 30°C to 160°C, the multimodal polyolefin prepared in step a) being a multimodal polyethylene;
b) providing an organic peroxide in an amount from 20 ppm to less than 100 ppm of organic peroxide with respect to the polyolefin powder;
c) mixing the polyolefin powder prepared in step a) and the organic peroxide provided in step b) at a temperature in the range from 10°C to 100°C without melting the polyolefin powder to form a polyolefin peroxide mixture;
d) melting and homogenizing the polyolefin peroxide mixture obtained in step c) within an extruder device wherein at least 90 wt.% of the organic peroxide decomposes and a molten polyolefin composition is formed;
e) adding one or more antioxidants to the molten polyolefin composition obtained in step d) to form a combination of molten polyolefin composition and antioxidant;
f) homogenizing the combination of molten polyolefin composition and antioxidant to form an antioxidant equipped molten polyolefin composition; and
g) pelletizing the antioxidant equipped molten polyolefin composition.

2. The process of claim 1, wherein the multimodal polyolefin in form of a polyolefin powder is prepared in one or more gas-phase polymerization reactors and at least one of the gas-phase polymerization reactors is a multizone circulating reactor in which one polymerization zone is a riser, in which growing polymer particles flow upwards under fast fluidization or transport conditions, and the other polymerization zones are sub-zones of a downcomer, in which the growing polymer particles flow downward in a densified form, wherein the riser and the downcomer are interconnected and polymer particles leaving the riser enter the downcomer and polymer particles leaving the downcomer enter the riser, thus establishing a circulation of polymer particles through the riser and the downcomer.

3. The process of claim 2, wherein the series of polymerization reactors comprises a fluidized-bed reactor upstream of the multizone circulating reactor.

4. The process of any of claims 1 to 3, wherein the olefin polymerization catalyst is a Ziegler- or Ziegler-Natta-catalyst comprising the reaction product of an aluminum alkyl with a titanium compound supported on a magnesium halide.

5. The process of any of claims 1 to 4, wherein the extruder device is a combination of two co-rotating twin-screw extruders, and the polyolefin powder and the organic peroxide are transferred into a first twin-screw extruder, in which step d) is carried out, and the second twin-screw extruder is provided with a stream of the molten polyolefin composition formed in step d) and carries out step f), or the extruder device is a counter-rotating continuous mixer equipped with gear pump or a co-rotating twin screw extruder equipped with gear pump.

6. The process of any of claims 1 to 5, wherein the antioxidant equipped molten polyolefin composition is passed through a melt filter before being pelletized.

7. The process of any of claims 1 to 6, wherein the multimodal polyolefin in form of a polyolefin powder prepared in step a) and the organic peroxide provided in step b) are supplied to a mixing device and the mixing of step c) occurs in the mixing device.

8. The process of any of claims 1 to 6, wherein the multimodal polyolefin in form of a polyolefin powder prepared in step a) is supplied directly to the extruder device or the multimodal polyolefin composition in form of a polyolefin powder prepared in step a) is supplied to a mixing device, mixed therein with one or more additives different from antioxidants and organic peroxides, and the mixture comprising the polyolefin powder and the additives different from antioxidants and organic peroxides is transferred from the mixing device into the extruder device, and the organic peroxide provided in step b) is supplied to the extruder device at a position where the polyolefin powder or the mixture comprising the polyolefin powder and the additives different from antioxidants and organic peroxides is not yet molten.

9. The process of any of claims 1 to 8, wherein the mixing of step c) is carried out in an atmosphere of reduced oxygen content and the oxygen content in the gas phase within the mixing device is less than 5 vol%.

10. The process of any of claims 1 to 9, wherein in step b), the organic peroxide is provided as a liquid or as a component of a liquid or the organic peroxide is provided in form of a mixture of the organic peroxide with a polyolefin powder.

11. The process of any of claims 1 to 10, wherein in step b), the organic peroxide is provided as a liquid or as a component of a liquid and the liquid comprising the organic peroxide is added to the polyethylene powder by passing the liquid with an injection pressure of 0.5 to 4 MPa through a spring injector comprising a preloaded spring.

12. The process of claim 11, wherein the organic peroxide is provided as a peroxide solution having a content of active oxygen in the range from 0.1 wt.% to 10 wt.%.

13. The process of any of the previous claims, wherein the multimodal polyolefin prepared in step a) has a M_{w}/Mₙ from 15 to 40.

14. The process of any of the previous claims, wherein the multimodal polyolefin prepared in step a) is a multimodal polyethylene having a density determined according to DIN EN ISO 1183-1:2004 at 23°C from 0.940 g/cm³ to 0.968 g/cm³.

15. A process for preparing a pipe comprising the steps of
a) preparing a multimodal polyolefin composition by the process of any of claims 1 to 14; and
b) forming the multimodal polyolefin composition into a pipe.

## Patentansprüche

1. Ein kontinuierliches Verfahren zur Herstellung einer multimodalen Polyolefinzusammensetzung, die ein oder mehrere Antioxidantien umfasst, mit den folgenden Schritten:
a) Herstellen eines multimodalen Polyolefins in Form eines Polyolefinpulvers mit einem Massenmediandurchmesser D50 der Polyolefinpartikel im Bereich von 300 µm bis 2500 µm, bestimmt gemäß dem in der Beschreibung offenbarten Verfahren, in einer Reihe von zwei oder mehr Polymerisationsreaktoren durch Polymerisieren eines oder mehrerer 1-Olefine in Gegenwart eines Olefinpolymerisationskatalysators bei Drücken von 0,5 MPa bis 10 MPa und Temperaturen von 30 °C bis 160 °C, wobei das in Schritt a) hergestellte multimodale Polyolefin ein multimodales Polyethylen ist;
b) Bereitstellen eines organischen Peroxids in einer Menge von 20 ppm bis weniger als 100 ppm, bezogen auf das Polyolefinpulver;
c) Mischen des in Schritt a) hergestellten Polyolefinpulvers und des in Schritt b) bereitgestellten organischen Peroxids bei einer Temperatur im Bereich von 10 °C bis 100 °C, ohne das Polyolefinpulver zu schmelzen, um ein Polyolefin-Peroxid-Gemisch zu bilden;
d) Schmelzen und Homogenisieren des in Schritt c) erhaltenen Polyolefin-Peroxid-Gemischs in einer Extrudervorrichtung, wobei mindestens 90 Gew.-% des organischen Peroxids zersetzt werden und eine geschmolzene Polyolefinzusammensetzung gebildet wird;
e) Zugeben eines oder mehrerer Antioxidantien zu der in Schritt d) erhaltenen geschmolzenen Polyolefinzusammensetzung, um eine Kombination aus geschmolzener Polyolefinzusammensetzung und Antioxidans zu bilden;
f) Homogenisieren der Kombination aus geschmolzener Polyolefinzusammensetzung und Antioxidans, um eine mit Antioxidans versehene geschmolzene Polyolefinzusammensetzung zu bilden; und
g) Pelletieren der mit Antioxidans versehenen geschmolzenen Polyolefinzusammensetzung.

2. Verfahren nach Anspruch 1, wobei das multimodale Polyolefin in Form eines Polyolefinpulvers in einem oder mehreren Gasphasenpolymerisationsreaktoren hergestellt wird und mindestens einer der Gasphasenpolymerisationsreaktoren ein Mehrzonen-Zirkulationsreaktor ist, in dem eine Polymerisationszone ein Steigrohr ist, in dem wachsende Polymerpartikel unter Bedingungen schneller Fluidisierung oder unter Transportbedingungen nach oben strömen, und die anderen Polymerisationszonen Unterzonen eines Fallrohrs sind, in denen die wachsenden Polymerpartikel in verdichteter Form nach unten strömen, wobei das Steigrohr und das Fallrohr miteinander verbunden sind und das Steigrohr verlassende Polymerpartikel in das Fallrohr eintreten und das Fallrohr verlassende Polymerpartikel in das Steigrohr eintreten, wodurch eine Zirkulation der Polymerpartikel durch das Steigrohr und das Fallrohr hergestellt wird.

3. Verfahren nach Anspruch 2, wobei die Reihe von Polymerisationsreaktoren einen Wirbelschichtreaktor stromaufwärts des Mehrzonen-Zirkulationsreaktors umfasst.

4. Verfahren nach einem der Ansprüche 1 bis 3, wobei der Olefinpolymerisationskatalysator ein Ziegler- oder Ziegler-Natta-Katalysator ist, der das Reaktionsprodukt eines Aluminiumalkyls mit einer auf einem Magnesiumhalogenid geträgerten Titanverbindung umfasst.

5. Verfahren nach einem der Ansprüche 1 bis 4, wobei die Extrudervorrichtung eine Kombination aus zwei gleichläufigen Doppelschneckenextrudern ist, wobei das Polyolefinpulver und das organische Peroxid in einen ersten Doppelschneckenextruder überführt werden, in dem Schritt d) durchgeführt wird, und der zweite Doppelschneckenextruder mit einem Strom der in Schritt d) gebildeten geschmolzenen Polyolefinzusammensetzung beschickt wird und Schritt f) durchführt, oder wobei die Extrudervorrichtung ein mit einer Zahnradpumpe ausgestatteter gegenläufiger Durchlaufmischer oder ein mit einer Zahnradpumpe ausgestatteter gleichläufiger Doppelschneckenextruder ist.

6. Verfahren nach einem der Ansprüche 1 bis 5, wobei die mit Antioxidans versehene geschmolzene Polyolefinzusammensetzung vor dem Pelletieren durch einen Schmelzfilter geleitet wird.

7. Verfahren nach einem der Ansprüche 1 bis 6, wobei das in Schritt a) hergestellte multimodale Polyolefin in Form eines Polyolefinpulvers und das in Schritt b) bereitgestellte organische Peroxid einer Mischvorrichtung zugeführt werden und das Mischen gemäß Schritt c) in der Mischvorrichtung stattfindet.

8. Verfahren nach einem der Ansprüche 1 bis 6, wobei das in Schritt a) hergestellte multimodale Polyolefin in Form eines Polyolefinpulvers direkt der Extrudervorrichtung zugeführt wird oder die in Schritt a) hergestellte multimodale Polyolefinzusammensetzung in Form eines Polyolefinpulvers einer Mischvorrichtung zugeführt, darin mit einem oder mehreren von Antioxidantien und organischen Peroxiden verschiedenen Additiven gemischt und die das Polyolefinpulver und die von Antioxidantien und organischen Peroxiden verschiedenen Additive umfassende Mischung von der Mischvorrichtung in die Extrudervorrichtung überführt wird, und wobei das in Schritt b) bereitgestellte organische Peroxid der Extrudervorrichtung an einer Stelle zugeführt wird, an der das Polyolefinpulver oder die das Polyolefinpulver und die von Antioxidantien und organischen Peroxiden verschiedenen Additive umfassende Mischung noch nicht geschmolzen ist.

9. Verfahren nach einem der Ansprüche 1 bis 8, wobei das Mischen in Schritt c) in einer Atmosphäre mit reduziertem Sauerstoffgehalt durchgeführt wird und der Sauerstoffgehalt in der Gasphase innerhalb der Mischvorrichtung weniger als 5 Vol.-% beträgt.

10. Verfahren nach einem der Ansprüche 1 bis 9, wobei in Schritt b) das organische Peroxid als Flüssigkeit oder als Bestandteil einer Flüssigkeit bereitgestellt wird oder das organische Peroxid in Form eines Gemischs aus dem organischen Peroxid und einem Polyolefinpulver bereitgestellt wird.

11. Verfahren nach einem der Ansprüche 1 bis 10, wobei in Schritt b) das organische Peroxid als Flüssigkeit oder als Bestandteil einer Flüssigkeit bereitgestellt wird und die das organische Peroxid umfassende Flüssigkeit dem Polyethylenpulver zugesetzt wird, indem die Flüssigkeit mit einem Einspritzdruck von 0,5 MPa bis 4 MPa durch einen eine vorgespannte Feder umfassenden Federinjektor geleitet wird.

12. Verfahren nach Anspruch 11, wobei das organische Peroxid als Peroxidlösung mit einem Gehalt an aktivem Sauerstoff im Bereich von 0,1 Gew.-% bis 10 Gew.-% bereitgestellt wird.

13. Verfahren nach einem der vorhergehenden Ansprüche, wobei das in Schritt a) hergestellte multimodale Polyolefin ein M_{w}/Mₙ von 15 bis 40 aufweist.

14. Verfahren nach einem der vorhergehenden Ansprüche, wobei das in Schritt a) hergestellte multimodale Polyolefin ein multimodales Polyethylen mit einer gemäß DIN EN ISO 1183-1:2004 bei 23 °C bestimmten Dichte von 0,940 g/cm³ bis 0,968 g/cm³ ist.

15. Verfahren zur Herstellung eines Rohrs, umfassend die folgenden Schritte:
a) Herstellen einer multimodalen Polyolefinzusammensetzung nach dem Verfahren gemäß einem der Ansprüche 1 bis 14; und
b) Formen der multimodalen Polyolefinzusammensetzung zu einem Rohr.

## Revendications

1. Procédé continu pour la préparation d'une composition de polyoléfine multimodale comprenant un ou plusieurs antioxydants , comprenant les étapes suivantes :
a) préparer une polyoléfine multimodale sous forme de poudre de polyoléfine présentant un diamètre médian en masse D50 des particules de polyoléfine compris entre 300 µm et 2 500 µm, tel que déterminé selon la méthode décrite dans la description, dans une série de deux réacteurs de polymérisation ou plus, par polymérisation d'une ou plusieurs 1-oléfines en présence d'un catalyseur de polymérisation d'oléfines, à des pressions comprises entre 0,5 MPa et 10 MPa et à des températures comprises entre 30 °C et 160 °C, la polyoléfine multimodale préparée à l'étape a) étant un polyéthylène multimodal ;
b) fournir un peroxyde organique en une quantité comprise entre 20 ppm et moins de 100 ppm, par rapport à la poudre de polyoléfine ;
c) mélanger la poudre de polyoléfine préparée à l'étape a) et le peroxyde organique fourni à l'étape b), à une température comprise entre 10 °C et 100 °C, sans faire fondre la poudre de polyoléfine, afin de former un mélange polyoléfine-peroxyde ;
d) faire fondre et homogénéiser le mélange polyoléfine-peroxyde obtenu à l'étape c) dans un dispositif d'extrusion, dans lequel au moins 90 % en poids du peroxyde organique se décompose et une composition de polyoléfine fondue est formée ;
e) ajouter un ou plusieurs antioxydants à la composition de polyoléfine fondue obtenue à l'étape d), afin de former une combinaison de composition de polyoléfine fondue et d'antioxydant ;
f) homogénéiser la combinaison de composition de polyoléfine fondue et d'antioxydant afin de former une composition de polyoléfine fondue pourvue d'un antioxydant ; et
g) granuler la composition de polyoléfine fondue pourvue d'un antioxydant.

2. Procédé selon la revendication 1, dans lequel la polyoléfine multimodale sous forme de poudre de polyoléfine est préparée dans un ou plusieurs réacteurs de polymérisation en phase gazeuse et au moins l'un des réacteurs de polymérisation en phase gazeuse est un réacteur à circulation multizone dans lequel une zone de polymérisation est une colonne montante, dans laquelle les particules de polymère en croissance s'écoulent vers le haut dans des conditions de fluidisation rapide ou de transport, et les autres zones de polymérisation sont des sous-zones d'une colonne descendante, dans lesquelles les particules de polymère en croissance s'écoulent vers le bas sous une forme densifiée, la colonne montante et la colonne descendante étant interconnectées, les particules de polymère quittant la colonne montante entrant dans la colonne descendante et les particules de polymère quittant la colonne descendante entrant dans la colonne montante, établissant ainsi une circulation des particules de polymère à travers la colonne montante et la colonne descendante.

3. Procédé selon la revendication 2, dans lequel la série de réacteurs de polymérisation comprend un réacteur à lit fluidisé en amont du réacteur à circulation multizone.

4. Procédé selon l'une quelconque des revendications 1 à 3, dans lequel le catalyseur de polymérisation d'oléfines est un catalyseur de type Ziegler ou Ziegler-Natta comprenant le produit de réaction d'un alkylaluminium avec un composé de titane supporté sur un halogénure de magnésium.

5. Procédé selon l'une quelconque des revendications 1 à 4, dans lequel le dispositif d'extrusion est une combinaison de deux extrudeuses à double vis corotatives, la poudre de polyoléfine et le peroxyde organique étant transférés dans une première extrudeuse à double vis dans laquelle l'étape d) est mise en œuvre, et la seconde extrudeuse à double vis étant alimentée par un flux de la composition de polyoléfine fondue formée à l'étape d) et mettant en œuvre l'étape f), ou le dispositif d'extrusion est un mélangeur continu à rotation inverse équipé d'une pompe à engrenages ou une extrudeuse à double vis corotative équipée d'une pompe à engrenages.

6. Procédé selon l'une quelconque des revendications 1 à 5, dans lequel la composition de polyoléfine fondue pourvue d'un antioxydant est acheminée à travers un filtre de matière fondue avant d'être granulée.

7. Procédé selon l'une quelconque des revendications 1 à 6, dans lequel la polyoléfine multimodale sous forme de poudre de polyoléfine préparée à l'étape a) et le peroxyde organique fourni à l'étape b) sont introduits dans un dispositif de mélange et le mélange de l'étape c) a lieu dans ce dispositif de mélange.

8. Procédé selon l'une quelconque des revendications 1 à 6, dans lequel la polyoléfine multimodale sous forme de poudre de polyoléfine préparée à l'étape a) est introduite directement dans le dispositif d'extrusion, ou la composition de polyoléfine multimodale sous forme de poudre de polyoléfine préparée à l'étape a) est introduite dans un dispositif de mélange, y est mélangée à un ou plusieurs additifs autres que des antioxydants et des peroxydes organiques, et le mélange comprenant la poudre de polyoléfine et les additifs autres que les antioxydants et les peroxydes organiques est transféré du dispositif de mélange vers le dispositif d'extrusion, et le peroxyde organique fourni à l'étape b) est introduit dans le dispositif d'extrusion à un emplacement où la poudre de polyoléfine ou le mélange comprenant la poudre de polyoléfine et les additifs autres que les antioxydants et les peroxydes organiques n'est pas encore fondu.

9. Procédé selon l'une quelconque des revendications 1 à 8, dans lequel le mélange de l'étape c) est effectué dans une atmosphère à teneur réduite en oxygène et la teneur en oxygène dans la phase gazeuse à l'intérieur du dispositif de mélange est inférieure à 5 % en volume.

10. Procédé selon l'une quelconque des revendications 1 à 9, dans lequel, à l'étape b), le peroxyde organique est fourni sous forme liquide ou en tant que composant d'un liquide, ou bien le peroxyde organique est fourni sous forme d'un mélange du peroxyde organique avec une poudre de polyoléfine.

11. Procédé selon l'une quelconque des revendications 1 à 10, dans lequel, à l'étape b), le peroxyde organique est fourni sous forme liquide ou en tant que composant d'un liquide, et le liquide comprenant le peroxyde organique est ajouté à la poudre de polyéthylène en faisant passer ledit liquide, à une pression d'injection comprise entre 0,5 et 4 MPa, à travers un injecteur à ressort comprenant un ressort précontraint.

12. Procédé selon la revendication 11, dans lequel le peroxyde organique est fourni sous forme d'une solution de peroxyde présentant une teneur en oxygène actif comprise entre 0,1 % en poids et 10 % en poids.

13. Procédé selon l'une quelconque des revendications précédentes, dans lequel la polyoléfine multimodale préparée à l'étape a) présente un rapport M_{w}/Mₙ compris entre 15 et 40.

14. Procédé selon l'une quelconque des revendications précédentes, dans lequel la polyoléfine multimodale préparée à l'étape a) est un polyéthylène multimodal présentant une densité déterminée selon la norme DIN EN ISO 1183-1:2004 à 23 °C de 0,940 g/cm³ à 0,968 g/cm³.

15. Procédé de préparation d'un tuyau comprenant les étapes suivantes :
a) préparer une composition de polyoléfine multimodale selon l'un quelconque des procédés des revendications 1 à 14 ; et
b) former la composition de polyoléfine multimodale en un tuyau.
